# EUROPÄISCHE PATENTSCHRIFT

(11) **EP 0 655 547 B1**
(45) Veröffentlichungstag und Bekanntmachung des Hinweises auf die Patenterteilung: **01.12.1999**
(21) Anmeldenummer: 94810527.5
(22) Anmeldetag: 13.09.1994
(51) Int. Cl.: E21B 10/44, E21B 10/36

(54) **Gesteinsbohrmeissel mit schraubenförmigem Förderteil**
Rock drill bit with helical conveying portion
Trépan de roche avec partie transporteuse hélicoidale

(30) Priorität: 12.11.1993 DE 4338667
(43) Veröffentlichungstag der Anmeldung: 31.05.1995
(73) Patentinhaber: HILTI Aktiengesellschaft, 9494 Schaan (LI)
(72) Erfinder: Obermeier, Josef, D-86971 Peiting (DE)
(74) Vertreter: Wildi, Roland

(56) Entgegenhaltungen:
- EP-A- 0 363 734
- DE-A- 3 400 182
- DE-B- 2 358 447
- DE-C- 925 282
- FR-A- 2 115 828
- US-A- 2 370 706
- US-A- 3 469 643
- US-A- 4 027 491

## Beschreibung

Die Erfindung betrifft einen Gesteinsbohrer mit Einspannschaft, mit Bohrerspitze und mit in Längsrichtung dazwischen angeordneten, schraubenlinienförmig verlaufenden Abfuhrnuten, wobei die zwischen den Abfuhrnuten verbleibenden Rücken zwischen jeweils an die Abfuhrnuten anschliessenden Führungsbereiche Nebennuten aufweisen und die rechtwinklig zur Neigung gemessene Breite der Abfuhrnut im wesentlichen der doppelten, rechtwinklig zur Neigung gemessen Breite des die Nebennut und zwei Führungsbereiche umfassenden Rückens entspricht.

Gesteinsbohrer der in Rede stehenden Art dienen der Herstellung von Bohrungen in Gestein, Beton, Mauerwerk und dergleichen. Von einem Antriebsgerät wird diesen Gesteinsbohrem meistens eine Drehbewegung und eine Schlagbewegung erteilt. Beide Bewegungen dienen der Erzeugung eines Bohrfortschrittes. Negativ auf den Bohrfortschritt wirkt sich bei herkömmlichen Gesteinsbohrem die zwischen Gesteinsbohrer und Gestein entstehende Reibung aus, da dadurch ein Grossteil der vom Antriebsgerät abgegebenen Leistung aufgebraucht wird.

Um die vorgenannte Reibung einigermassen zu bewältigen, weisen die bekannten Gesteinsbohrer zumeist zwei schraubenlinienförmig verlaufende Abfuhmuten auf, zwischen welchen sich Rücken bilden. Da diese Rücken aus Gründen der Materialfestigkeit eine gewisse Breite aufweisen müssen, entsteht eine relativ grosse Anlagefläche am Gestein, was zu einer entsprechend grossen Reibung führt. Diese Reibung wird noch erhöht durch abgebautes Bohrgut, welches trotz den Abfuhmuten zwischen Rücken und Gestein gelangen kann und durch Verdämmung zu einer weiteren Erhöhung der Reibung oder sogar zu einem Verklemmen der Gesteinsbohrer führen kann.

Zur Begegnung des vorgenannten Nachteils ist aus der US-PS 3,469,643 ein Bohrwerkzeug für Mauerwerk mit einer reduzierten Umfangsfläche im Bereich der Abfuhrnuten bekannt. Die Abfuhrnuten verlaufen zwischen einem Einspannschaft und einer Bohrerspitze schraubenlinienförmig in Längsrichtung des Bohrwerkzeuges. Die zwischen den Abfuhrnuten befindlichen Rücken weisen eine Nebennut auf, die zwischen jeweils an die Abfuhrnuten anschliessenden Führungsbereichen angeordnet ist. Die rechtwinklig zur Neigung der Abfuhrnuten gemessene Breite der Abfuhrnuten entspricht im wesentlichen der doppelten, rechtwinklig zur Neigung gemessenen Breite des die Nebennut und zwei Führungsbereiche umfassenden Rückens.

Aus der US-PS 2,370,706 ist ein Gesteinsbohrer bekannt, der zwei Abfuhmuten aufweist, wobei in die Rücken zwischen diesen Abfuhmuten je eine Nebennut eingearbeitet ist. Diese Nebennut, die dazu führen soll, die zur Reibung führende Fläche des Rückens zu verkleinern, ist flach und kreissegmentartig ausgebildet. Aufgrund dieser flachen und kreissegmentartigen Ausbildung ist es notwendig, die Breite des Rückens gross zu wählen, um eine ausreichende Verminderung der zur Reibung führenden Fläche zu erzielen. Die gross zu wählende Breite des Rückens führt aber zum Nachteil, dass die Breite der Abfuhmuten im Verhältnis zur Breite des Rückens relativ gering gewählt werden muss. Diese relativ geringe Breite der Abfuhrnuten stellt einen nur geringen Raum für die Abfuhr des Bohrgutes zur Verfügung, so dass eine Leistungseinbusse bei diesem bekannten Bohrer durch eine ungenügende Möglichkeit der Abfuhr an Bohrgut entsteht.

Die Bohrgutabfuhr dieses bekannten Gesteinsbohrers lässt insbesondere dann zu wünschen übrig, wenn feuchtes Gestein, Beton, Mauerwerk und dgl. gebohrt wird, oder wenn gegebenenfalls eine Zuführung eines Kühlmittels an die Bearbeitungsstelle während des Bohrvorganges erfolgt. Falls Bohrgut in die zum Bohrerumfang hin verhältnismässig flach ausgebildeten Nebennuten gerät, verklemmt es sich, so dass der Bohrvorgang durch weiteren Leistungsabfall beeinträchtigt wird. Die geringe Breite der Abfuhmuten verursacht zudem eine schlechte Abfuhr des Bohrguts, was zu einem häufigen Unterbruch des Bohrvorganges und damit zu erhöhtem Zeitauwand führt.

Der Erfindung liegt die Aufgabe zugrunde, einen Gesteinsbohrer zu schaffen, der sich aufgrund guter Bohrgutabfuhr und wenig Reibungsverlusten durch hohe Leistungsfähigkeit auszeichnet.

Erfindungsgemäss wird dies dadurch erreicht, dass die rechtwinklig zur Neigung gemessene Breite der Abfuhrnut der 1,4- bis 2,5-fachen, rechtwinklig zur Neigung gemessenen Breite des die Nebennut und zwei Führungsbereiche umfassenden Rückens entspricht und dass der rechtwinklig zur Neigung verlaufende Querschnitt der Abfuhmuten im wesentlichen symmetrisch ausgebildet ist und von der Mitte ausgehend flach sowie zu den Führungsbereichen hin steil ansteigt.

Durch die grössere Breite der Abfuhrnut entsteht die Möglichkeit, einerseits eine grössere Menge an Bohrgut abzuführen und andererseits die mit der Bohrlochwandung in Berührung gelangenden Flächen der Rücken zu verringern, so dass insgesamt eine Zunahme der Bohrleistung erfolgt.

Damit eine einwandfreie Abfuhr von Bohrgut mit Hilfe der Abfuhmuten ermöglicht werden kann, ist der rechtwinklig zur Neigung verlaufende Querschnitt der Abfuhmuten im wesentlichen symmetrisch ausgebildet und steigt von der Mitte ausgehend flach und gerade sowie zu den Führungsbereichen hin steil und gerade an. Dieser geeignete Querschnitt der Abfuhmuten ermöglicht die Aufnahme grösserer Mengen von Bohrgut und einen sehr guten Transport desselben.

Zweckmässigerweise entspricht die rechtwinklig zur Neigung gemessene Breite der Nebennuten der 0,5- bis 2,5-fachen, rechtwinklig zur Neigung gemessenen Breite eines Führungsbereiches. Abhängig von der Beschaffenheit des zu bearbeitenden Gesteins, Betons, Mauerwerks und dgl. kann die Breite der Führungsbereiche zunehmen und die Breite der Nebennut abnehmen. Beispielsweise bei hartem Material können die Breite der Führungsbereiche geringer und die Nebennuten breiter ausgebildet sein.

Die Nebennuten bewirken in erster Linie eine Reduzierung der Flächen der Rücken. Sie können ebenfalls der Abfuhr von Bohrgut dienen, welches zwischen Rücken und Bohrlochwandung gerät. Einem Verklemmen des Gesteinsbohrers wird dadurch entgegengewirkt, so dass die Leistung des Gesteinsbohrers weiter erhöht werden kann. Die radial gemessene Tiefe der Nebennuten entspricht dabei zweckmässigerweise der 0,2- bis 0,5-fachen Tiefe der Abfuhrnuten.

Damit insbesondere bei der Abfuhr von feuchtem Gestein, Beton, Mauerwerk od. dgl. eine Verklemmung des Bohrguts im Bereich der Nebennuten verhindert werden kann, ist der rechtwinklig zur Neigung verlaufende Querschnitt der Nebennuten vorzugsweise im wesentlichen halbkreisförmig ausgebildet.

Die Erfindung wird anhand von Zeichnungen, die ein Ausführungsbeispiel wiedergeben, näher erläutert. Es zeigen:
- Fig. 1: einen erfindungsgemässen Gesteinsbohrer;
- Fig. 2: einen vergrösserten Ausschnitt eines Längsschnittes durch den Gesteinsbohrer gemäss Fig. 1.

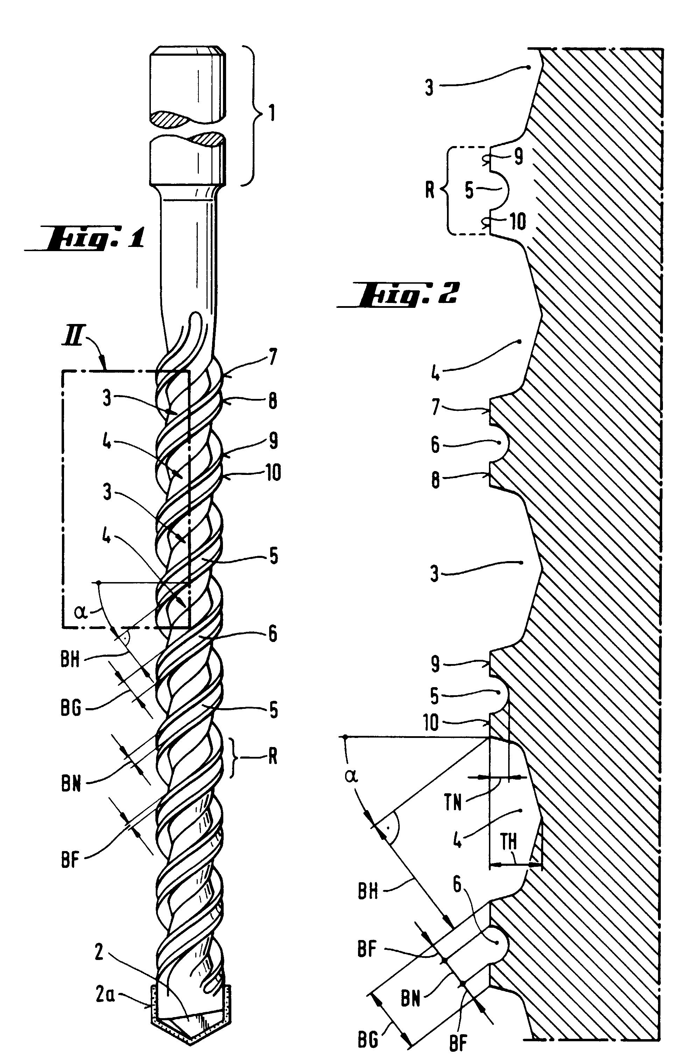

Der gemäss den Fig. 1 und 2 dargestellte Gesteinsbohrer besitzt einen Einspannschaft 1 mit einer Bohrerspitze 2, die eine Hartmetallschneidplatte 2a trägt. Zwischen der Bohrerspitze 2 und dem Einspannschaft 1 besitzt der Gesteinsbohrer schraubenlinienförmig verlaufende Abfuhmuten 3, 4 und im Bereich der dazwischenliegenden Rücken R ebenfalls schraubenlinienförmig verlaufende Nebennuten 5, 6. Die Abfuhmuten 3, 4 und die Nebennuten 5, 6 sind durch Führungsbereiche 7, 8, 9, 10 voneinander getrennt.

Die rechtwinklig zur Neigung α gemessene Breite BH der Abfuhrnut 3, 4 entspricht der 1,4- bis 2,5-fachen, rechtwinklig zur Neigung α gemessenen Breite BG des die Nebennut 5, 6 und zwei Führungsbereichen 7, 8, 9, 10 umfassenden Rückens R. Die rechtwinklig zur Neigung gemessene Breite BN der Nebennuten 5, 6 entspricht der 0,5- bis 2,5-fachen, rechtwinklig zur Neigung gemessenen Breite BF eines Führungsbereiches 7, 8, 9, 10. Die Tiefe TN der Nebennuten 5, 6 entspricht der 0,2- bis 0,5-fachen Tiefe TH der Abfuhmuten 3, 4.

Der rechtwinklig zur Neigung α verlaufende Querschnitt der Nebennuten 5, 6 ist im wesentlichen halbkreisförmig ausgebildet.

Der rechtwinklig zur Neigung verlaufende Querschnitt der Abfuhmuten 3, 4 steigt symmetrisch, ausgehend von der Mitte der Abfuhmuten 3, 4 flach sowie zu den Führungsbereichen 7, 8, 9, 10 steil an.

Die an der Bohrerspitze 2 angeordnete Hartmetallschneidplatte 2a überragt den von den Führungsbereichen 7, 8, 9, 10 der Rücken gebildeten Durchmesser in radialer Richtung.

## Patentansprüche

1. Gesteinsbohrer mit Einspannschaft (1), mit Bohrerspitze (2) und mit in Längsrichtung dazwischen angeordneten, schraubenlinienförmig verlaufenden Abfuhmuten (3, 4), wobei die zwischen den Abfuhrnuten (3, 4) verbleibenden Rücken (R) zwischen jeweils an die Abfuhrnuten (3, 4) anschliessenden Führungsbereiche (7, 8, 9, 10) Nebennuten (5, 6) aufweisen und die rechtwinklig zur Neigung (α) gemessene Breite (BH) der Abfuhrnuten (3, 4) im wesentlichen der doppelten, rechtwinklig zur Neigung (α) gemessenen Breite (BG) des die Nebennut (5, 6) und zwei Führungsbereiche (7, 8, 9 10) umfassenden Rückens (R) entspricht, **dadurch gekennzeichnet**, dass die rechtwinklig zur Neigung (α) gemessene Breite (BH) der Abfuhrnut (3, 4) der 1,4 bis 2,5-fachen, rechtwinklig zur Neigung (α) gemessenen Breite (BG) des die Nebennut (5, 6) und zwei Führungsbereiche (7, 8, 9, 10) umfassenden Rückens (R) entspricht und dass der rechtwinklig zur Neigung (α) verlaufende Querschnitt der Abfuhmuten (3, 4) im wesentlichen symmetrisch ausgebildet ist und von der Mitte ausgehend flach und gerade sowie zu den Führungsbereichen (7, 8, 9, 10) hin steil und gerade ansteigt.

2. Gesteinsbohrer nach Anspruch 1, dadurch gekennzeichnet, dass die rechtwinklig zur Neigung (α) gemessene Breite (BN) der Nebennuten (5, 6) der 0,5- bis 2,5-fachen, rechtwinklig zur Neigung (α) gemessenen Breite (BF) eines Führungsbereiches (7, 8, 9, 10) entspricht.

3. Gesteinsbohrer nach einem der Ansprüche 1 oder 2, dadurch gekennzeichnet, dass die Tiefe (TN) der Nebennuten (5, 6) der 0,2- bis 0,5-fachen Tiefe (TH) der Abfuhmuten (3, 4) entspricht.

4. Gesteinsbohrer nach einem der Ansprüche 1 bis 3, dadurch gekennzeichnet, dass der rechtwinklig zur Neigung (α) verlaufende Querschnitt der Nebennuten (5, 6) im wesentlichen halbkreisförmig ausgebildet ist.

## Claims

1. Rock drill with a clamping shank (1), with a bit (2) and with clearance flutes (3, 4) extending in the shape of helices longitudinally therebetween, the body clearances (R) left between the clearance flutes (3, 4) having ancillary flutes (5, 6) between guiding zones (7, 8, 9, 10) which are respectively contiguous with the clearance flutes (3, 4), and the width (BH) of the clearance flutes (3, 4), where said width (BH) is measured at right angles to the pitch (α), corresponding to substantially twice the width (BG) of the body clearance (R) comprising the ancillary flute (5, 6) and two guiding zones (7, 8, 9, 10), where said width (BG) is measured at right angles to the pitch (α), characterised in that the width (BH) of the clearance flute (3, 4), where said width (BH) is measured at right angles to the pitch (α), is 1.4 to 2.5 times the width (BG) of the body clearance (R) comprising the ancillary flute (5, 6) and two guiding zones (7, 8, 9, 10), where said width (BG) is measured at right angles to the pitch (α), and that the cross-section of the clearance flutes (3, 4), where said cross-section extends at right angles to the pitch (α), is substantially symmetrical in construction and proceeding from the centre runs flat and in a straight line and rises steeply and in a straight line towards the guiding zones (7, 8, 9, 10).

2. Rock drill according to claim 1, characterised in that the width (BN) of the ancillary flutes (5, 6), where said width (BN) is measured at right angles to the pitch (α), is 0.5 to 2.5 times the width (BF) of a guiding zone (7, 8, 9, 10), where said width (BF) is measured at right angles to the pitch (α).

3. Rock drill according to either of claims 1 and 2, characterised in that the depth (TN) of the ancillary flutes (5, 6) is 0.2 to 0.5 times the depth (TH) of he clearance flutes (3, 4).

4. Rock drill according to any of claims 1 to 3, characterised in that the cross-section of the ancillary flutes (5, 6), which extends at right angles to the pitch (α), is of a substantially semicircular configuration.

## Revendications

1. Foret pour roche comprenant une queue de serrage (1), une pointe de foret (2) et, disposées entre elles, des gorges d'évacuation à tracé hélicoïdal (3, 4) s'étendant dans la direction longitudinale, les crêtes (R) subsistant entre les gorges d'évacuation (3, 4) comportant des gorges auxiliaires (5, 6) entre des zones de guidage (7, 8, 9, 10) adjacentes à chacune des gorges d'évacuation (3, 4), et la largeur (BH) des gorges d'évacuation (3, 4) mesurée perpendiculairement à la pente (α) correspondant sensiblement à deux fois la largeur (BG), mesurée perpendiculairement à la pente (α), de la crête (R) englobant la gorge auxiliaire (5, 6) et deux zones de guidage (7, 8, 9, 10), caractérisé en ce que la largeur (BH) de la gorge d'évacuation (3, 4) mesurée perpendiculairement à la pente (α) correspond à 1,4 à 2,5 fois la largeur (BG), mesurée perpendiculairement à la pente (α), de la crête (R) englobant la gorge auxiliaire (5, 6) et deux zones de guidage (7, 8, 9, 10), et en ce que la section des gorges d'évacuation (3, 4) s'étendant perpendiculairement à la pente (α) est sensiblement symétrique et monte avec une pente douce rectiligne à partir du centre et avec une pente forte rectiligne jusqu'aux zones de guidage (7, 8, 9, 10).

2. Foret pour roche selon la revendication 1, caractérisé en ce que la largeur (BN) des gorges auxiliaires (5, 6) mesurée perpendiculairement à la pente (α) correspond à 0,5 à 2,5 fois à la largeur (BF) d'une zone de guidage (7, 8, 9, 10) mesurée perpendiculairement à la pente (α).

3. Foret pour roche selon l'une des revendications 1 ou 2, caractérisé en ce que la profondeur (TN) des gorges auxiliaires (5, 6) correspond à 0,2 à 0,5 fois la profondeur (TH) des gorges d'évacuation (3, 4).

4. Foret pour roche selon l'une des revendications 1 à 3, caractérisé en ce que la section des gorges auxiliaires (5, 6) prise perpendiculairement à la pente (α) est de forme sensiblement semi-circulaire.
